**Europäisches Patentamt**

**European Patent Office**

**Office européen des brevets**

(11) Veröffentlichungsnummer : **0 419 842 B1**

(12) **EUROPÄISCHE PATENTSCHRIFT**

(45) Veröffentlichungstag der Patentschrift :
**15.04.92 Patentblatt 92/16**

(51) Int. Cl.$^5$ : **C02F 1/72, C02F 1/52, C02F 9/00**

(21) Anmeldenummer : **90116049.9**

(22) Anmeldetag : **22.08.90**

(54) **Verfahren zur Abtrennung von halogenorganischen Schadstoffen mit mindestens 5 C-Atomen aus Wasser.**

(30) Priorität : **27.09.89 DE 3932175**

(43) Veröffentlichungstag der Anmeldung :
**03.04.91 Patentblatt 91/14**

(45) Bekanntmachung des Hinweises auf die
Patenterteilung :
**15.04.92 Patentblatt 92/16**

(84) Benannte Vertragsstaaten :
**AT BE CH DE DK ES FR GB GR IT LI LU NL SE**

(56) Entgegenhaltungen :
**EP-A- 0 022 525**
**EP-A- 0 238 731**
**EP-A- 0 277 632**

(56) Entgegenhaltungen :
**WASSER - ABWASSER (GWF), Band 129, Nr. 7, Juli 1988, Seiten 484-491, München, DE; H. SCHWARZER: "Oxidative Abwasser-Reinigung mit Wasserstoffperoxid"**
**JOURNAL WATER POLLUTION CONTROL FEDERATION, Band 36, Nr. 9, September 1964, Seiten 1116-1128, Washington, DC, US; H.R. EISENHAUER: "Oxidation of phenolic wastes"**
**PATENT ABSTRACTS OF JAPAN, Band 10, Nr. 136 (C-347), 20. Mai 1985;**

(73) Patentinhaber : **Degussa Aktiengesellschaft**
**Weissfrauenstrasse 9**
**W-6000 Frankfurt am Main 1 (DE)**

(72) Erfinder : **Fischer, Joachim**
**Buchbergstrasse 3**
**W-6458 Rodenbach 1 (DE)**
Erfinder : **Wolf, Hubert**
**Am Nussberg 19**
**W-6451 Hammersbach 2 (DE)**

## Beschreibung

Die Erfindung betrifft ein Verfahren zur Abtrennung von halogenorganischen Schadstoffen mit mindestens 5 C-Atomen aus Wasser, insbesondere Abwasser, auf Restwerte unter 1 mg/l, berechnet als organisch gebundenes Halogen, vorzugsweise unter 0,2 mg/l. Das Verfahren ist einstufig und basiert auf der Oxidation von im Wasser vorhandenen und/oder zugegebenen $Fe^{2+}$-Ionen zu $Fe^{3+}$-Ionen und Ausfällung von Eisen(III)-hydroxokomplexen, an welchen die halogenorganischen Schadstoffe adsorbiert und mit diesen abgetrennt werden. Das Verfahren wird vorzugsweise elektrometrisch gesteuert und eignet sich insbesondere zur Abtrennung von perchlorierten Biphenylenen (PCB's), perchlorierten Dibenzodioxinen und Dibenzofuranen sowie anderen halogenierten Aromaten und Heteroaromaten und längerkettigen Halogenkohlenwasserstoffen.

Die Abtrennung von halogenorganischen Schadstoffen aus Wasser, insbesondere Abwasser, gewinnt aus toxikologischen und ökotoxikologischen Gründen an Bedeutung. So ist eine Behandlung von zum Beispiel Sickerwässern aus Deponien sowie mit halogenorganischen Schadstoffen belasteter Grundwässer erforderlich. Einerseits würden Deponiesickerwässer, wenn sie ohne Vorbehandlung in einen Vorfluten gelangen, zu starken Beeinträchtigungen von Fauna und Flora führen und bei Einleitung in eine biologische Kläranlage deren Betrieb empfindlich stören oder gar verhindern. Andererseits würde ein Versickern im Erdreich zu einer Verseuchung des Grundwassers führen, was dessen Verwendung zur Gewinnung von Trinkwasser verhindern würde. Die Behandlung von mit halogenorganischen Schadstoffen kontaminiertem Grundwasser ist erforderlich, um dessen Ausbreitung zu verhindern.

Für die Behandlung von halogenorganische Schadstoffe enthaltenden Sicker- und Grundwässern, welche im allgemeinen in mehr oder weniger großer Menge zusätzlich andere organische und anorganische Schadstoffe enthalten, stehen derzeit die folgenden physikalisch-chemischen Verfahren zur Verfügung - siehe K. Leonhard in "Berichte aus Wassergütewirtschaft und Gesundheitsingenieurwesen der Technischen Universität München" Nr. 74 (1987), 230-237: Flüssig-Flüssig-Extraktion, Strippung mit Dampf und Luft, Mono- oder Bidestillation, Adsorption an Aktivkohle.

Aufgrund der komplexen Zusammensetzung der infragestehenden Wässer ist eine vollständige Entfernung der eine biologische Reinigungsstufe störenden Schadstoffe im allgemeinen nur durch eine Kombination verschiedener und/oder mehrstufiger Verfahren möglich. Dies bedingt einen erheblichen Aufwand bei der Einstellung und dem Betrieb dafür geeigneter Anlagen. Wegen der z. T. rasch wechselnden Zusammensetzung der Wässer sind solche Verfahren von besonderem Interesse, welche bei kontinuierlichem Betrieb sicher steuerbar und damit wirtschaftlich zu betreiben sind.

Mit einer Flüssig-Flüssig-Extraktion können zwar chlororganische Verbindungen aus einer wäßrigen Phase abgetrennt werden, jedoch wird eine vollständige Abtrennung nur durch eine vierstufige Extraktion sichergestellt. Nachteilig ist ferner, daß gerade bei Sickerwässern eine starke Emulsionsbildung auftritt und ein Adsorptionsschritt der Extraktion nachgeschaltet werden muß.

Durch Strippung von halogenorganischen Schadstoffen mit Dampf oder Luft verteilen sich die Schadstoffe sowohl auf die Strippphase als auch die eigentliche Wasserphase, so daß aus beiden Phasen durch weitere Verfahren, etwa Adsorption oder Verbrennung, die jeweils darin enthaltenen halogenorganischen Schadstoffe entfernt werden müssen.

Die Eindampfverfahren sind einmal sehr energieaufwendig, zum anderen können mit den Brüden halogenorganische Schadstoffe, sogar perchlorierte Dibenzodioxine und Dibenzofurane, abgetrieben werden, so daß andere Verfahren, etwa eine Adsorption an Aktivkohle, nachgeschaltet werden müssen.

Die Adsorption von in hochbelasteten Abwässern oder Sickerwässern enthaltenen aromatischen, heteroaromatischen und aliphatischen Halogenverbindungen an Aktivkohle kann nur als Nachbehandlungsstufe angesehen werden, da der direkte Einsatz eine extrem hohe Einsatzmenge und zusätzlich eine mehrstufige Adsorptionsanlage erfordern würde. Ferner bedarf es dann der Entsorgung großer Mengen der kontaminierten Aktivkohle.

Bekannt ist auch, Schadstoffe aus Abwässern durch Flockung bzw. Fällung unter Verwendung von insbesondere Verbindungen des dreiwertigen Eisens und Bildung von Eisen(III)-hydroxokomplexen zu eliminieren. Die Schadstoffe werden in der Flocke zum Teil eingeschlossen und/oder adsorptiv und/oder in Form von Fe-Komplexen chemisch gebunden und damit abtrennbar gemacht. So lassen sich beispielsweise zwar die CSB- und BSB-Werte von Sickerwässern absenken, jedoch wird eine Kombination mit einer Absorption an Aktivkohle für erforderlich gehalten - vgl. H.-J. Ehrig in "Deponie: Ablagerung von Abfällen / K.J. Thomé-Kozmiensky" (1987), Seiten 560-579. Um den organischen Halogengehalt auf Werte unter 1 mg Cl/l Wasser abzusenken, bedurfte es der Anwendung einer Flockungsfällung mit Eisen(III)-chlorid gefolgt von einer Aktivkohlebehandlung - vgl. A. Denne und E. Ecker in "Altlasten / K.J. Thomé-Kozmiensky" (1987), Seiten 649-656.

Zur Behandlung von Sickerwasser mit biologisch schwer abbaubaren chlororganischen Verbindungen wurde auch eine Oxidation mit Wasserstoffperoxid in Gegenwart einer katalytischen Menge $Fe^{2+}$ erprobt - vgl.

EP 0 419 842 B1

E. Gilbert und F. Bauer, Kernforschungszentrum Karlsruhe, KfK 4030, Febr. 1986. Bei einem pH-Wert unter 5 läßt sich bei einer $H_2O_2$-Dosis von 1 g $H_2O_2$ je g chemischen Sauerstoffbedarf (CSB) und einem $H_2O_2/Fe^{2+}$-Molverhältnis von 10:1 (Fentons Reagenz) und einer Reaktionszeit um eine Stunde ein großer Teil der organischen Schadstoffe abbauen. Unter diesen Bedingungen konnte aber der AOX-Wert als Maß für halogenorganische Schadstoffe zwar reduziert, aber bei weitem nicht unter 1 mg/l gesenkt werden. Wird nach der Oxidation der pH-Wert auf 7-8 eingestellt, fallen Eisen(III)-hydroxokomplexe (=Eisen(III)-oxidhydrat) aus, welche einen Teil des organischen Kohlenstoffs adsorbiert und eingeschlossen enthalten: dies ändert aber das Bild bezüglich des Restgehalts an chlororganischen Schadstoffen im behandelten Wasser nur wenig, und auch durch eine nachgeschaltete biologische Reinigungsstufe konnte der AOX-Wert nur um insgesamt 92 % reduziert werden.

Die Aufgabe der Erfindung besteht darin, ein Verfahren zur Abtrennung von halogenorganischen Schadstoffen mit mindestens 5 C-Atomen aus Wasser, das zusätzlich andere organische und/oder anorganische Schadstoffe enthalten kann, aufzuzeigen, das es gestattet, einstufig und leicht steuerbar die genannten halogenorganischen Schadstoffe durch Adsorption an in situ gebildeten Eisen(III)-hydroxokomplexen bis auf Restwerte von unter 1 mg/l, berechnet als organisch gebundenes Halogen, abzutrennen. Das Verfahren sollte mit einem möglichst niedrigen Einsatz an Chemikalien und geringem Anfall an kontaminierten Produkten auch dann zuverlässig betrieben werden können, wenn der Gehalt an Schadstoffen im zu behandelnden Wasser stark schwankt.

Die Aufgabe wird gelöst durch ein Verfahren zur Abtrennung von halogenorganischen Schadstoffen mit mindestens 5 C-Atomen aus Wasser, das zusätzlich andere organische und/oder anorganische Schadstoffe enthalten kann, auf Restwerte unter 1 mg/l, berechnet als organisch gebundenes Halogen, durch Adsorption der halogenorganischen Schadstoffe an in situ durch Hydrolyse von Eisen(III)-salzen gebildeten Eisen(III)-hydroxokomplexen und Abtrennung derselben in flockiger Form bei pH 5 bis 10, das dadurch gekennzeichnet ist, daß man im Wasser den Gehalt an $Fe^{2+}$ bestimmt und, soweit erforderlich, durch Zugabe eines Eisen(II)-salzes einen Gehalt von 20 bis 1000 mg $Fe^{2+}$ pro l Wasser einstellt und anschließend ein Oxidationsmittel zur Überführung von $Fe^{2+}$ in $Fe^{3+}$ in einer Menge zugibt, die jene nicht überschreitet, welche zur Oxidation von mindestens 20 mg $Fe^{2+}$/l und maximal 1000 mg der anwesenden Menge $Fe^{2+}$/l in Gegenwart von ggf. anwesenden, wie $Fe^{2+}$ praktisch augenblicklich oxidierbaren anderen Bestandteilen erforderlich ist.

Die Unteransprüche richten sich auf bevorzugte Ausführungsformen des Verfahrens.

Bei dem erfindungsgemäß zu behandelnden Wasser kann es sich um Wasser unterschiedlicher Provenienz handeln, etwa um Prozeßwasser, Abwasser oder, besonders bevorzugt, um Deponiesickerwasser und kontaminiertes Grundwasser. Nach der Behandlung kann das Wasser, soweit erforderlich, einer biologischen Kläranlage zugeleitet werden. Der im Verfahren anfallende Schlamm aus Eisen(III)-hydroxokomplexen, auch als Eisen(III)-oxidhydrat bezeichnet, enthält nicht nur die aus dem Wasser abgetrennten halogenorganischen Schadstoffe mit mindestens 5 C-Atomen, sondern er kann auch eine Reihe anderer Inhaltsstoffe des Wassers, wie z. B. Eisen-Huminsäure-Komplexe und Schwermetallcyanide im Falle eines Deponiesickerwassers, enthalten. Erfindungsgemäß gelingt es somit, nicht nur die anspruchsgemäßen Schadstoffe abzutrennen, sondern gleichzeitig werden die anspruchsgemäßen Schadstoffe abzutrennen, sondern gleichzeitig werden auch der CSB-Wert (=Chemischer Sauerstoff-Bedarf) und ggf. Schadmetallgehalt erniedrigt.

Bei den abzutrennenden halogenorganischen Schadstoffen mit mindestens 5 C-Atomen handelt es sich insbesondere um solche aus der Gruppe der polychlorierten Biphenylene (PCB's), polychlorierter Dibenzodioxine und Dibenzofurane, polychlorierter Benzole, Chlorphenole, halogenhaltiger Pestizide und aliphatischer und cycloaliphatischer Chlorkohlenwasserstoffe mit mindestens 5 C-Atomen. Besonders geeignet ist das Verfahren zur Abtrennung der sogenannten PCB's einschließlich der oben genannten Dioxine und Furane und aromatischen Verbindungen. Der Restwert von unter 1 mg/l bezieht sich auf das organisch gebundene Chlor der halogenorganischen Schadstoffe mit mehr als 5 C-Atomen. Halogenorganische Verbindungen mit 1 bis 4 C-Atomen, wie Halogenalkane und -alkene, werden im erfindungsgemäßen Verfahren nicht oder unvollständig aus dem Wasser abgetrennt. Das erfindungsgemäße Verfahren läßt sich somit besonders dort vorteilhaft einsetzen, wo das Wasser keine halogenorganischen Schadstoffe mit 1 bis 4 C-Atomen enthält oder deren Abtrennung nicht erforderlich ist. Vorzugsweise wird das erfindungsgemäße Verfahren so betrieben, daß der Restgehalt an organisch gebundenem Chlor bei Abwesenheit von halogenorganischen $C_1$-$C_4$-Verbindungen im zu behandelnden Wasser unter 0,2 mg/l und besonders bevorzugt unter 0,1 mg/l liegt.

Die Flockung bzw. Fällung von in situ durch Hydrolyse von Eisen(III)-verbindungen gebildeten Eisen(III)-hydroxokomplexen, welche kolloide und in wechselndem Umfang gelöste Bestandteile im Wasser durch Adsorption und/oder Einschluß abzutrennen gestattet, ist in der Abwassertechnik ein bekannter und auch praktizierter Verfahrensschritt. Üblicherweise wird dem Wasser eine lösliche Eisen(III)-verbindung zugegeben, und oberhalb eines pH-Wertes von etwa 3,5 beginnt die Ausfällung, welche bei pH 5 praktisch quantitativ ist. Zur Ausbildung eines leichter durch Schwerkraft abtrennbaren und entwässerbaren Niederschlags wird häufig ein

3

pH-Wert oberhalb 7 eingestellt. Es wurde gefunden, daß durch diese Flockung in gewissem Umfang auch die anspruchsgemäßen Schadstoffe abtrennbar sind, Restwerte unter 1 mg/l organisch gebundenes Halogen hiermit aber nicht erreichbar sind. Es war somit überraschend, daß durch Zugabe eines Oxidationsmittels zu einem Wasser, das 20 bis 1000 mg $Fe^{2+}$/l enthält, in situ solche Eisen(III)-hydroxokomplexe gebildet werden, welche die anspruchsgemäßen Schadstoffe praktisch quantitativ adsorbieren oder in anderer Weise binden und bei pH 5 bis 10 abgetrennt werden können.

Das zu behandelnde Wasser soll einen Gehalt von 20 bis 1000 mg $Fe^{2+}$/l, vorzugsweise 50 bis 500 mg/g und besonders bevorzugt 100 bis 200 mg/g enthalten. Dieser $Fe^{2+}$-Gehalt kann ganz oder teilweise bereits in dem zu behandelnden Wasser vorliegen oder durch Zugabe einer löslichen Eisen(II)-verbindung, vorzugsweise $FeSO_4 \cdot 7\ H_2O$ oder $FeCl_2$, eingestellt werden. Üblicherweise wird man die Eisen(II)-verbindung als wäßrige Lösung einsetzen, da hiermit eine einfache Dosierung, wie sie für ein z. B. elektrometrisch gesteuertes kontinuierliches Verfahren zwingend ist, gewährleistet ist. Prinzipiell kann der $FeCl_2$-Gehalt auch über 1000 mg/l liegen, jedoch ist dies im Hinblick auf das daraus resultierende Schlammvolumen weniger empfehlenswert und zum Zweck der Abtrennung der halogenorganischen Schadstoffe nicht erforderlich. Im Falle sehr geringer $Fe^{2+}$-Gehalte kann es vorteilhaft sein, nach der erfindungsgemäßen Oxidation und, soweit erforderlich, pH-Einstellung ein polymeres Flockungshilfsmittel zur Verbesserung der Flockung und leichteren Abtrennung des Niederschlags zuzusetzen.

Zur Oxidation des $Fe^{2+}$ zu $Fe^{3+}$ wird dem $Fe^{2+}$ enthaltenden Wasser eine ausreichende Menge Oxidationsmittel zugegeben. Es ist ein Kennzeichen des Verfahrens, daß die Oxidationsmittelmenge so bemessen wird, daß damit mindestens 20 mg $Fe^{2+}$/l bis maximal der anwesenden Menge $Fe^{2+}$/l, also maximal 1000 mg $Fe^{2+}$/l, in Gegenwart von ggf. anwesenden, wie $Fe^{2+}$ praktisch augenblicklich oxidierbaren anderen organischen und-/oder anorganischen Inhaltsstoffen des zu behandelnden Wassers oxidiert werden. Vorzugsweise oxidiert man im wesentlichen die gesamte anwesende Menge $Fe^{2+}$. Es steht somit kein Oxidationsmittel zum oxidativen Angriff von C-Atomen zur Verfügung. Die vorbekannte oxidative Behandlung von Deponiesickerwasser unter Verwendung von Fentons Reagenz erforderte stets einen vielfachen Überschuß des Oxidationsmittels gegenüber $Fe^{2+}$, ohne daß die halogenorganischen Schadstoffe ausreichend abgebaut und abgetrennt werden konnten. Unter den ebenso leicht wie $Fe^{2+}$ oxidierbaren Stoffen sind solche zu verstehen, welche mit dem $Fe^{2+}$ unter den Betriebsbedingungen - im allgemeinen 5-25 °C - nennenswert um das zugegebene Oxidationsmittel konkurrieren; hierzu gehören beispielsweise organische und anorganische Sulfide, Sulfite.

Als Oxidationsmittel können im Prinzip solche verwendet werden, welche ein höheres Oxidationspotential als $Fe^{3+}$ haben, jedoch kommen in der Praxis nur solche in Betracht, welche dem Wasser keine neuen Schadstoffe zufügen. Chlor, Hypochlorit und Chlordioxid können verwendet werden, sind aber wegen der damit einhergehenden Aufsalzung und des sicherheitstechnischen Aufwands weniger empfehlenswert. Sauerstoff als Oxidationsmittel hat den Nachteil, daß es bei der Behandlung von stark kontaminiertem Wasser, wie Deponiesickerwasser, zu erheblichen Geruchsemissionen kommen kann. Eine Ozonisierung ist möglich, im Regelfall aber wenig wirtschaftlich. Bevorzugt werden anorganische Aktivsauerstoffverbindungen, wie insbesondere Wasserstoffperoxid, Perschwefelsäure, Persulfate, Natriumpercarbonat, Natriumperborate. Ganz besonders bevorzugt wird Wasserstoffperoxid in Form handelsüblicher wäßriger Lösungen mit einem Gehalt von 30 - 85 Gew.-%, soweit erwünscht, können auch verdünntere als 30 gew.-%ige Lösungen eingesetzt werden.

Das erfindungsgemäße Verfahren läßt sich durch Messung des $Fe^{2+}$/$Fe^{3+}$-Redoxpotentials sehr einfach steuern. Das $Fe^{2+}$/$Fe^{3+}$-Redoxpotential, das sich in an sich bekannter Weise z. B. unter Verwendung einer Edelmetallelektrode und einer Bezugselektrode, messen läßt, kann sowohl zur Bestimmung des $Fe^{2+}$-Gehalts als auch zur Dosierung des Oxidationsmittels herangezogen werden, da bei vollständiger Überführung des $Fe^{2+}$ in $Fe^{3+}$ ein praktisch konstanter Potentialwert von +970 bis +980 mV (Pt/Thalamid-Elektrodenkette) erreicht wird. Unter Verwendung der genannten Elektrodenkette entspricht ein Potential von +450 mV etwa 1000 mg $Fe^{2+}$/l und ein Potentialwert von +600 mV etwa 70 mg $Fe^{2+}$/l - gemessen bei pH 7,2. Für die Aussteuerung der Dosiereinrichtung für die bedarfsgerechte Zugabe der $Fe^{2+}$-salzlösung kann ein Redox-Regler mit P- (=Proportional), PI- (=Proportional-Integral) oder PID- (=Proportional-Integral-Digital) Verhalten eingesetzt werden; auch der Einsatz der SP-Steuerung (speicherprogrammierbar) ist möglich. Die Dosierpumpe für das Oxidationsmittel wird automatisch abgeschaltet, wenn der vorgegebene Endpotentialwert erreicht ist.

Der pH-Wert des zu behandelnden Wassers kann zu Beginn im schwach sauren bis schwach alkalischen Bereich, etwa pH 5-9, liegen. Während der Oxidation sinkt der pH-Wert je nach dem Gehalt an $Fe^{2+}$ als auch dem Puffervermögen des Wassers ab. Sofern nach der Zugabe des Oxidationsmittels der pH-Wert unter 5 abgesunken ist, wird die meist während der Oxidationsmittelzugabe beginnende Ausfällung von Fe(III)-hydroxokomplexen durch anschließende Zugabe einer alkalisch wirkenden Alkali- oder Erdalkaliverbindung vervollständigt.

Wie bereits ausgeführt, wird der die adsorbierten halogenierten und ggf. andere Schadstoffe enthaltende Niederschlag bei pH 5-10, vorzugsweise 7,5-9, vom Wasser abgetrennt. Zur Abtrennung sind gängige Vorrichtungen, wie Eindicker, Separatoren, Zentrifugen, Filterpressen, einsetzbar. Der abgetrennte Niederschlag, der die Schadstoffe enthält, kann einer Verbrennungsanlage zugeführt werden. Durch das erfindungsgemäße Verfahren lassen sich mittels einfacher Maßnahmen und mit geringem Chemikalienaufwand und gleichzeitig sicher steuerbar sehr niedrige Restwerte an organisch gebundenem Chlor aus Schadstoffen mit mindestens 5 C-Atomen erzielen.

Die Erfindung wird an den nachfolgenden Beispielen verdeutlicht.

Beispiel 1

Deponiesickerwässer und Grundwässer fallen meist in einem pH-Bereich von 6,5 bis 7,5 an. Bei diesem pH-Wert liegt das darin gelöste bzw. zugegebene $Fe^{2+}$ in gelöster Form vor, so daß mittels eines zuvor erstellten Diagramms die Konzentration in Abhängigkeit vom gemessenen Redoxpotential bestimmt werden kann.

Zu 5 l eines Deponiesickerwassers mit einem Gehalt von 50 ppb PCB, einem pH-Wert von 6,8 und einem Redoxpotential von +750 mV, gemessen mit einer Pt/Thalamid-Elektrodenkette (Thalamid ist eine Bezugselektrode der Firma Schott & Sen., Mainz) wurde eine 5 gew.-%ige wäßrige $FeSO_4$-Lösung bis zu einem Redoxpotential von 580 mV, entsprechend 100 mg $Fe^{2+}$/l, zugegeben. Im Anschluß wurde unter Rühren eine 5 gew.-%ige wäßrige $H_2O_2$-Lösung bis zu einem Potential von +970 mV zudosiert. Nach Einstellung eines pH-Wertes von 8,5 durch Zugabe von Natronlauge wurde filtriert. Der Restgehalt an PCB im behandelten Wasser betrug unter 1 ppb - die PCB-Bestimmung erfolgte durch gaschromatographische Bestimmung eines Extraktes.

Beispiel 2

Zu entgiften war ein Wasser, das 10 mg Clophen/l (=PCB) und organische Lösungsvermittler enthielt.
a) Das Wasser wurde erfindungsgemäß behandelt, indem 100 mg $Fe^{2+}$ zugegeben und dann redoxgesteuert mit Wasserstoffperoxid oxidiert wurde; der pH-Wert wurde mit NaOH auf 8,5 eingestellt, anschließend wurde filtriert. Im Filtrat wurde ein Restgehalt von unter 1 µg Clophen/l analysiert.
b) Zum Vergleich wurde das gleiche Wasser mit 100 mg $Fe^{3+}$ versetzt - Zugabe als $Fe_2(SO_4)_3$. Nach der Einstellung des pH-Wertes auf 8,5 wurde filtriert. Das Filtrat wies einen Restgehalt von 2,5 mg Clophen/l auf.

**Patentansprüche**

1. Verfahren zur Abtrennung von halogenorganischen Schadstoffen mit mindestens 5 C-Atomen aus Wasser, das zusätzlich andere organische und/oder anorganische Schadstoffe enthalten kann, auf Restwerte unter 1 mg/l, berechnet als organisch gebundenes Halogen, durch Adsorption der halogenorganischen Schadstoffe an in situ durch Hydrolyse von Eisen(III)-salzen gebildeten Eisen(III)-hydroxokomplexen und Abtrennung derselben in flockiger Form bei pH 5 bis 10, dadurch gekennzeichnet, daß man im Wasser den Gehalt an $Fe^{2+}$ bestimmt und, soweit erforderlich, durch Zugabe eines Eisen(II)-salzes einen Gehalt von 20 bis 1000 mg $Fe^{2+}$ pro l Wasser einstellt und anschließend ein Oxidationsmittel zur Überführung von $Fe^{2+}$ in $Fe^{3+}$ in einer Menge zugibt, die jene nicht überschreitet, welche zur Oxidation von mindestens 20 mg $Fe^{2+}$/l und maximal 1000 mg der anwesenden menge $Fe^{2+}$/l in Gegenwart von gegebenenfalls anwesenden, wie $Fe^{2+}$ praktisch augenblicklich oxidierbaren anderen Bestandteilen erforderlich ist.

2. Verfahren nach Anspruch 1, dadurch gekennzeichnet, daß es sich bei dem zu behandelnden Wasser um Deponiesickerwasser oder kontaminiertes Grundwasser mit einem Gehalt an halogenorganischen Schadstoffen aus der Gruppe polychlorierter Biphenylene (PCB's), polychlorierter Dibenzodioxine und Dibenzofurane, polychlorierter Benzole, Chlorphenole, halogenhaltiger Pestizide handelt.

3. Verfahren nach Anspruch 1 oder 2, dadurch gekennzeichnet, daß man halogenorganische Schadstoffe mit mindestens 5 C-Atomen bis auf Restwerte unter 0,2 mg/l, vorzugsweise unter 0,1 mg/l, abtrennt.

4. Verfahren nach einem oder mehreren der Ansprüche 1 bis 3, dadurch gekennzeichnet, daß man als Oxidationsmittel eine anorganische Aktivsauerstoffverbindung, insbesondere Persulfate, Percarbonate oder besonders bevorzugt Wasserstoffperoxid, verwendet.

5. Verfahren nach einem oder mehreren der Ansprüche 1 bis 4, dadurch gekennzeichnet, daß man dem Wasser eine solche Menge eines Eisen(II)-salzes zugibt, daß der Gehalt 50 bis 400 mg $Fe^{2+}$/l, vorzugsweise 100 bis 200 mg $Fe^{2+}$/l, beträgt, und durch Zugabe des Oxidationsmittels im wesentlichen das gesamte anwesende $Fe^{2+}$ in $Fe^{3+}$ überführt.

6. Verfahren nach einem oder mehreren der Ansprüche 1 bis 5, dadurch gekennzeichnet, daß man das Eisen(II)-salz als auch das Oxidationsmittel in Form wäßriger Lösungen zum zu behandelnden Wasser zugibt und die Zugabemengen über die Messung des $Fe^{2+}/Fe^{3+}$-Redoxpotentials steuert.

7. Verfahren nach Anspruch 6, dadurch gekennzeichnet, daß man unter Verwendung einer Platin/Thalamid-Elektrodenkette durch Zugabe einer wäßrigen Eisen(II)-salzlösung ein Redoxpotential im Bereich von +450 bis 600 mV einstellt und anschließend Wasserstoffperoxid als Oxidationsmittel in einer Menge zufügt, bis das Redoxpotential einen Wert von +980 mV annimmt.


## Claims

1. A process for the separation of organohalogen pollutants containing at least 5 C atoms from water, which may also contain other organic and/or inorganic pollutants, to residual contents of less than 1 mg/l, expressed as organically bound halogen, by adsorption of the organohalogen pollutants to iron(III) hydroxocomplexes formed in situ by hydrolysis of iron(III) salts and separation thereof in flocculent form at pH 5 to 10, characterized in that the content of $Fe^{2+}$ in the water is determined and, if necessary, a content of 20 to 1,000 mg $Fe^{2+}$ per litre water is established by addition of an iron(II) salt and an oxidizing agent is subsequently added to convert $Fe^{2+}$ into $Fe^{3+}$ in a quantity not exceeding that which is required to oxidize at least 20 mg $Fe^{2+}$/l and at most 1,000 mg of the quantity of $Fe^{2+}$ present per litre in the presence of any other constituents present which oxidize substantially instantaneously like $Fe^{2+}$.

2. A process as claimed in claim 1, characterized in that the water to be treated is drainage water from waste disposal sites or contaminated ground water containing organohalogen pollutants from the group of polychlorinated biphenylenes (PCBs), polychlorinated dibenzodioxins and dibenzofurans, polychlorinated benzenes, chlorophenols, halogen-containing pesticides.

3. A process as claimed in claim 1 or 2, characterized in that organohalogen pollutants containing at least 5 C atoms are separated to residual contents of less than 0.2 mg/l and preferably less than 0.1 mg/l.

4. A process as claimed in one or more of claims 1 to 3, characterized in that an inorganic active oxygen compound selected in particular from persulfates and percarbonates, preferably hydrogen peroxide, is used as the oxidizing agent.

5. A process as claimed in one or more of claims 1 to 4, characterized in that an iron(II) salt is added to the water in such a quantity that a content of 50 to 400 mg $Fe^{2+}$/l and preferably 100 to 200 mg $Fe^{2+}$/l is established and substantially all the $Fe^{2+}$ present is converted into $Fe^{3+}$ by addition of the oxidizing agent.

6. A process as claimed in one or more of claims 1 to 5, characterized in that the iron(II) salt and the oxidizing agent are added to the water to be treated in the form of aqueous solutions and the quantities added are controlled by measurement of the $Fe^{2+}/Fe^{3+}$ redox potential.

7. A process as claimed in claim 6, characterized in that, using a platinum/thalamide chain, a redox potential of +450 to 600 mV is established by addition of an aqueous iron(II) salt solution and hydrogen peroxide is subsequently added as oxidizing agent until the redox potential assumes a value of +980 mV.


## Revendications

1. Procédé pour la séparation de substances nocives organiques halogénées ayant au moins 5 atomes de carbone, à partir d'eau qui peut contenir en plus d'autres substances nocives organiques et/ou minérales, jusqu'à des valeurs résiduelles inférieures à 1 mg/l, calculées en halogène organiquement lié, par adsorption des substances nocives organiques halogénée sur des hydroxocomplexes de $Fe^{2+}$ formés in situ par hydrolyse de sels ferriques, et séparation de ces complexes sous forme floculée à pH 5-10, caractérisé en ce que l'on détermine la teneur de l'eau en $Fe^{2+}$ et on ajuste par addition d'un sel de fer (II) une teneur en $Fe^{2+}$ de 20 à 1 000 mg par litre d'eau, et on ajoute ensuite un oxydant pour la conversion du $Fe^{2+}$ en $Fe^{3+}$, en une quantité qui n'excède pas celle qui est requise pour l'oxydation d'au moins 20 mg de $Fe^{2+}$ par litre et au maximum de 1000 mg du $Fe^{2+}$ présent par litre, en présence d'autres composants pratiquement instantanément oxydables comme $Fe^{2+}$, éventuellement présents.

2. Procédé selon la revendication 1, caractérisé par le fait qu'en ce qui concerne l'eau à traiter, il s'agit d'eau d'infiltration de décharge ou d'eau souterraine contaminée contenant des substances nocives organiques halogénées, du groupe des biphénylènes polychlorés (PCB), des dibenzodioxines et dibenzofurannes polychlorés, des benzènes polychlorés, des chlorophénols, des pesticides halogénés.

3. Procédé selon la revendication 1 ou 2, caractérisé en ce que l'on sépare des substances nocives organiques halogénées comportant au moins 5 atomes de carbone, jusqu'à des valeurs résiduelles inférieures à 0,2 mg/l, de préférence inférieures à 0,1 mg/l.

4. Procédé selon l'une quelconque des revendications 1 à 3, caractérisé en ce que l'on utilise en tant qu'oxydant un composé minéral contenant de l'oxygène actif, en particulier des persulfates, percarbonates ou, de façon particulièrement préférée, du peroxyde d'hydrogène.

5. Procédé selon l'une quelconque des revendications 1 à 4, caractérisé en ce que l'on ajoute à l'eau une quantité d'un sel de fer (II), telle que la teneur en $Fe^{2+}$ aille de 50 à 400 mg de $Fe^{2+}$ par litre, de préférence de 100 à 200 mg de $Fe^{2+}$ par litre, et on convertit pratiquement tout le $Fe^{2+}$ en $Fe^{3+}$ par addition de l'oxydant.

6. Procédé selon l'une quelconque des revendications 1 à 6, caractérisé en ce que l'on ajoute à l'eau à traiter le sel de $Fe^{2+}$ ainsi que l'oxydant, sous forme de solutions aqueuses, et on règle les quantités ajoutées au moyen de la mesure du potentiel redox $Fe^{2+}/Fe^{3+}$.

7. Procédé selon la revendication 6, caractérisé en ce que l'on ajoute un potentiel redox dans la plage de + 450 à 600 mV, en utilisant une chaîne d'électrodes platine/Thalamid, par addition d'une solution aqueuse de sel de fer (II) et on ajoute ensuite du peroxyde d'hydrogène, en tant qu'oxydant, en une quantité jusqu'à ce que le potentiel redox adopte une valeur de + 980 mV.